# EUROPEAN PATENT APPLICATION

(11) **EP 4 613 363 A1**
(43) Date of publication of application: **10.09.2025**
(21) Application number: 23885407.9
(22) Date of filing: 26.09.2023
(51) Int. Cl.: B01D 63/00, B01D 63/10

(54) **SEPARATION MEMBRANE ELEMENT**

(30) Priority: 31.10.2022 JP 2022174183
(71) Applicant: Toray Industries, Inc., Tokyo 103-8666 (JP)
(72) Inventor: KONDA, Takeshi, Otsu-shi, Shiga 520-8558 (JP); HANADA, Shigehisa, Otsu-shi, Shiga 520-8558 (JP); TAKAGI, Kentaro, Otsu-shi, Shiga 520-8558 (JP); TANIGUCHI, Shu, Otsu-shi, Shiga 520-8558 (JP); YOSHIDOMI, Shinichiro, Nagoya-shi, Aichi 455-8502 (JP); NISHIOKA, Takuji, Otsu-shi, Shiga 520-8558 (JP); MIYASHITA, Masaomi, Otsu-shi, Shiga 520-8558 (JP); ONO, Fuka, Otsu-shi, Shiga 520-8558 (JP)
(74) Representative: Hoefer & Partner Patentanwälte mbB
(86) International application number: PCT/JP2023/035035
(87) International publication number: WO 2024/095643

(57) **Abstract**

This separation membrane element has a thread diameter of a supply side flow channel material other than intersections of a net shape, the thread diameter being smaller than a thread diameter of the intersections, has θ×(1-Lₚ/L_{q})²>15, wherein, in a plane parallel to the flow direction of supply water and vertical to the planar direction of the supply side flow channel material, P is a point on the outer circumference of a cutting plane other than the intersections where the distance between the cutting plane and a separation membrane is minimum, Q is a point on the outer circumference of the cutting plane where the distance on the same side as the separation membrane on the downstream side of supply water from P is maximum, Lₚ is the distance between P and the separation membrane, L_{q} is the distance between Q and the separation membrane and θ is an elevation angle from P to Q, and has the proportion of the area of the cutting plane relative to the area of a diagram formed with a line forming a convex hull enclosing, among the outer circumference connecting P with Q on the cutting plane, the outer circumference closer to the separation membrane surface and the outer circumference further from the separation membrane surface of 70% or more and Lₚ of 15% or less of the thickness of the supply side flow channel.

## Description

### TECHNICAL FIELD

The present invention relates to a separation membrane element for separating impurities from various liquids containing impurities, particularly for use in desalination of seawater, desalination of brackish water, production of ultrapure water, wastewater treatment, or the like.

### BACKGROUND ART

In a technique for removing ionic substances contained in seawater, brackish water, and the like, a separation method using a separation membrane element has been increasingly used as a process for energy saving and resource saving in recent years. Separation membranes used in the separation method using the separation membrane element are classified into a microfiltration membrane, an ultrafiltration membrane, a nanofiltration membrane, a reverse osmosis membrane, and a forward osmosis membrane in terms of a pore diameter and a separation function thereof. These membranes are used for, for example, production of drinking water from seawater, brackish water, water containing harmful substances, and the like, production of industrial ultrapure water, wastewater treatment, recovery of valuable materials, and the like, and are used selectively depending on target separation components and separation performance.

There are various forms of separation membrane elements, and the various forms thereof are common in that raw water is supplied to one surface of the separation membrane and a permeated fluid is obtained from the other surface. When the separation membrane element includes a large number of bundled separation membranes, the separation membrane element is formed such that a membrane area per separation membrane element increases, that is, an amount of the permeated fluid obtained per separation membrane element increases. As the separation membrane element, various shapes such as a spiral type, a hollow fiber type, a plate and frame type, a rotary flat membrane type, and a flat membrane integrated type have been proposed in accordance with applications and purposes.

For example, spiral-type separation membrane elements are widely used for reverse osmosis filtration. The spiral-type separation membrane element includes a water collection pipe and a separation membrane unit wound around the water collection pipe. The separation membrane unit is formed by stacking a supply-side flow channel material for supplying raw water (that is, water-to-be-treated) as supply water to a separation membrane surface, a separation membrane for separating components contained in the raw water, and a permeation-side flow channel material for guiding a permeated fluid that has permeated through the separation membrane and separated from a supply-side fluid to the water collection pipe. The spiral-type separation membrane element is preferably used in view that a large amount of permeated fluid can be taken out because pressure can be applied to raw water.

In order to enhance the performance of the separation membrane element, it is preferable that a concentration polarization phenomenon can be prevented as much as possible, in which a concentration of a membrane surface salt is locally increased by concentrating a dissolved salt in the supply water on the membrane surface, while reducing pressure loss of the supply-side flow channel, from the view point that pressure applied to the separation membrane element can be used for filtration without loss. Therefore, improvement in the performance of the separation membrane element with the supply-side flow channel material has been proposed.

Specifically, Patent Literature 1 proposes a net in which pressure loss is reduced by having a cross-sectional portion in which fibers between intersection points of fibrous material in a supply-side flow channel material are thin and a yarn diameter in a parallel direction to a flow surface of supply water is larger than a yarn diameter in a direction perpendicular to the flow surface of supply water.

### CITATION LIST

### PATENT LITERATURE

Patent Literature 1: JP2007-117949A

### SUMMARY OF INVENTION

### TECHNICAL PROBLEM

However, in the above-described separation membrane element, a low-speed region of a supply water flow is likely to locally occur on the separation membrane surface, it cannot be said that the concentration polarization phenomenon is sufficiently prevented, and the applied pressure may be lost. Therefore, an object of the present invention is to provide a separation membrane element capable of reducing loss of applied pressure by reducing the pressure loss and concentration polarization of a supply-side flow channel.

### SOLUTION TO PROBLEM

The present invention and preferred embodiments thereof for solving the above problems include the following configurations.
[1] A separation membrane element including:
   a water collection pipe;
   a separation membrane having a supply-side surface and a permeation-side surface;
   a supply-side flow channel material disposed on the supply-side surface; and
   a permeation-side flow channel material disposed on the permeation-side surface,
   in which the separation membrane, the supply-side flow channel material, and the permeation-side flow channel material are wound around the water collection pipe,
   the supply-side flow channel material has a net shape in which a plurality of fibrous rows X formed of fibrous materials A arranged in one direction and a plurality of fibrous rows Y formed of fibrous materials B arranged in a direction different from that of the fibrous rows X three-dimensionally intersect each other to form intersection points,
   a yarn diameter of a fibrous material other than an intersection portion of the supply-side flow channel material is smaller than a yarn diameter of the intersection portion,
   in a plane parallel to a flow direction of supply water and perpendicular to a plane direction of the supply-side flow channel material, when a point, at which a distance between the separation membrane and a cut surface of at least one of the fibrous materials A and B other than an intersection portion is minimum, on an outer periphery of the cut surface is denoted by P; a point, at which a distance on the same side as the distance to the separation membrane is maximum, on the outer periphery of the cut surface downstream of P in a flow of the supply water is denoted by Q; a distance between P and the separation membrane is denoted by Lₚ; a distance between Q and the separation membrane is denoted by L_{q}; and an elevation angle from P to Q is denoted by θ [°]; a relation of θ × (1 - Lₚ/L_{q})² > 15 is satisfied in a portion of 50% or more of the fibrous materials other than the intersection portions of the supply-side flow channel material,
   when a ratio of an area of the cut surface to an area of a figure formed by an outer periphery lₚ and a line segment l_{q}' that convexly encapsulates an outer periphery l_{q}, where the outer periphery lₚ is an outer periphery connecting P and Q on a side close to the separation membrane surface and the outer periphery l_{q} is an outer periphery connecting P and Q on a side far from the separation membrane surface in the cut surface, is denoted by α, a relation of α ≥ 70% is satisfied, and
   Lₚ is 15% or less of a thickness D_{C} of the supply-side flow channel.
[2] The separation membrane element according to the above [1], in which relations of θ × (1 - Lₚ/L_{q})² > 20 and θ > 43° are satisfied.
[3] The separation membrane element according to the above [1], in which relations of θ × (1 - Lₚ/L_{q})² > 24 and θ > 46° are satisfied.
[4] The separation membrane element according to any one of the above [1] to [3], in which in the cut surface, when a maximum width of the supply-side flow channel material in a thickness direction is denoted by W₁, and a distance between a straight line passing through a center of the cut surface in the thickness direction and parallel to the flow direction of the supply water and a straight line passing through a center of the supply-side flow channel in the thickness direction and parallel to the flow direction of the supply water is denoted by W₂, a relation of W₂ - W₁/2 ≥ 0 is satisfied.
[5] The separation membrane element according to any one of the above [1] to [4], in which the separation membrane element has a protrusion at a rear portion of the flow direction of the supply water in the cut surface.
[6] The separation membrane element according to any one of the above [1] to [5], in which a relation of α ≥ 90% is satisfied.
[7] The separation membrane element according to any one of the above [1] to [6], in which the supply-side flow channel material is an oblique net.
[8] The separation membrane element according to any one of the above [1] to [7], in which an interval between intersection portions of the supply-side flow channel material in the flow direction of the supply water is 5 times or more and 10 times or less a thickness of the supply-side flow channel material.
[9] The separation membrane element according to any one of the above [1] to [7], in which an interval between intersection portions of the supply-side flow channel material in the flow direction of the supply water is 5 times or more and 7 times or less a thickness of the supply-side flow channel material.
[10] The separation membrane element according to any one of the above [1] to [7], in which an interval between intersection portions of the supply-side flow channel material in the flow direction of the supply water is 8 times or more and 10 times or less a thickness of the supply-side flow channel material.
[11] A liquid filtration method using the separation membrane element according to any one of the above [1] to [10].
[12] A liquid separation device using the separation membrane element according to any one of the above [1] to [10].

### ADVANTAGEOUS EFFECTS OF INVENTION

According to the present invention, a separation membrane element with an excellent water production amount and an excellent salt rejection rate can be obtained because concentration polarization in a membrane surface can be prevented, and pressure loss in a supply water flow channel can be prevented by forming a vortex of supply water on a surface of a separation membrane.

### BRIEF DESCRIPTION OF DRAWINGS

[FIG. 1] FIG. 1 is a partially developed perspective view illustrating an example of a separation membrane element.
[FIG. 2] FIG. 2 is a plan view illustrating an example of a supply-side flow channel material of an embodiment.
[FIG. 3] FIG. 3 is a cross-sectional view illustrating an example of the supply-side flow channel material of the embodiment.
[FIG. 4] FIG. 4 is a cross-sectional view illustrating an example of the supply-side flow channel material.
[FIG. 5] FIG. 5 is a cross-sectional view illustrating an example of the supply-side flow channel material of the embodiment.
[FIG. 6] (a) to (e) of FIG. 6 are cross-sectional views illustrating examples of a supply-side flow channel material of an embodiment in a plane parallel to a flow direction of supply water and perpendicular to a plane direction of the supply-side flow channel material.
[FIG. 7] (f) to (k) of FIG. 7 are cross-sectional views illustrating examples of a supply-side flow channel material other than the embodiment in a plane parallel to a flow direction of supply water and perpendicular to a plane direction of the supply-side flow channel material.
[FIG. 8] (l) to (o) of FIG. 8 are cross-sectional views illustrating examples of the supply-side flow channel material other than the embodiment in a plane parallel to a flow direction of supply water and perpendicular to a plane direction of the supply-side flow channel material.

### DESCRIPTION OF EMBODIMENTS

Hereinafter, embodiments of the present invention will be described in detail.

### <Separation Membrane Element>

A separation membrane element of the present embodiment includes at least a water collection pipe, a separation membrane, a supply-side flow channel material, and a permeation-side flow channel material.

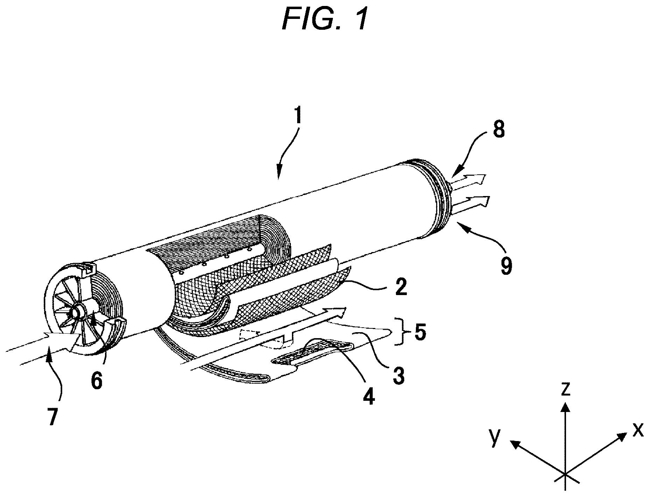

In a spiral-type separation membrane element 1 illustrated in FIG. 1, a polymer net is used as a supply-side flow channel material 2 forming a flow channel on a supply side. As a permeation-side flow channel material 4, tricot having an interval smaller than that of the supply-side flow channel material 2 is used for the purpose of forming a flow channel on a permeation side and preventing a separation membrane 3 from falling. An envelope-shaped membrane 5 is formed by the permeation-side flow channel material 4 and the separation membrane 3 that is superposed on both surfaces of the permeation-side flow channel material 4 and bonded thereto in an envelope shape. An inner side of the envelope-shaped membrane 5 constitutes a permeation-side flow channel. The envelope-shaped membrane 5 alternately stacked with the supply-side flow channel material 2 has a predetermined portion on an opening side bonded to an outer peripheral surface of a water collection pipe 6 and is wound in a spiral shape. An x-axis direction illustrated in FIG. 1 is a longitudinal direction of the water collection pipe 6. A y-axis direction is a direction perpendicular to the longitudinal direction of the water collection pipe 6.

In the spiral-type separation membrane element 1, the supply water 7 is supplied from one side surface, and the supply water 7 is gradually separated into permeated water 8 and concentrated water 9 while flowing parallel to the water collection pipe 6. The permeated water 8 comes out of the spiral-type separation membrane element 1 from a side surface opposite to the side surface to which the supply water 7 is supplied.

In this system, the supply water 7 flows from one side surface to the other side surface of the spiral-type separation membrane element 1, and therefore, a distance at which the supply water is in contact with the membrane is inevitably sufficient. Accordingly, there is a characteristic that the supply water 7 is sufficiently separated into the permeated water 8 and the concentrated water 9. There are various forms of separation membrane elements, and the various forms thereof are common in that supply water is supplied to one surface of the separation membrane and permeated water is obtained from the other surface. As the separation membrane element of the present embodiment, in addition to the spiral type, separation membrane elements of various shapes using a flat membrane such as a plate and frame type or a flat membrane integrated type can be adopted according to the application or purpose.

### <Supply-Side Flow Channel >

### (Supply-Side Flow Channel Material)

In the separation membrane element, in order to prevent concentration polarization in a membrane surface, it is important to generate a vortex (flow) of the supply water on a membrane surface behind the fibrous material. This is because an increase in salt concentration is prevented by reducing the number of retention sites.

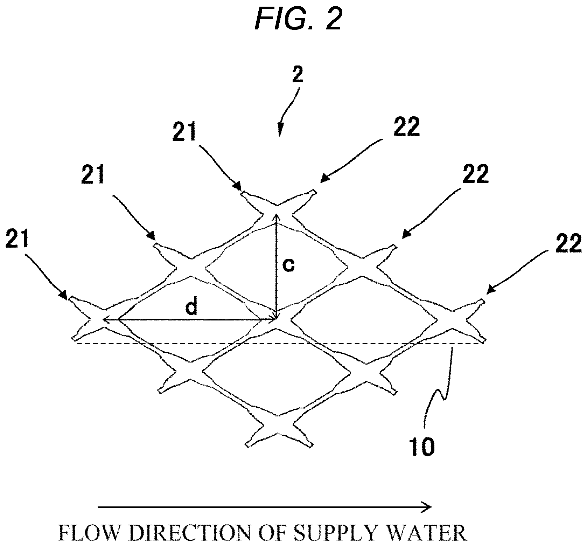

Therefore, as illustrated in FIG. 2, the supply-side flow channel material of the present embodiment has a net shape in which a plurality of fibrous rows X formed of fibrous materials 21 (fibrous materials A) arranged in one direction and a plurality of fibrous rows Y formed of fibrous materials 22 (fibrous materials B) arranged in a direction different from the fibrous rows X three-dimensionally intersect with each other to form intersection points, and yarn diameters of the fibrous materials other than the intersection portions of the supply-side flow channel material are smaller than the yarn diameters at the intersection portions.

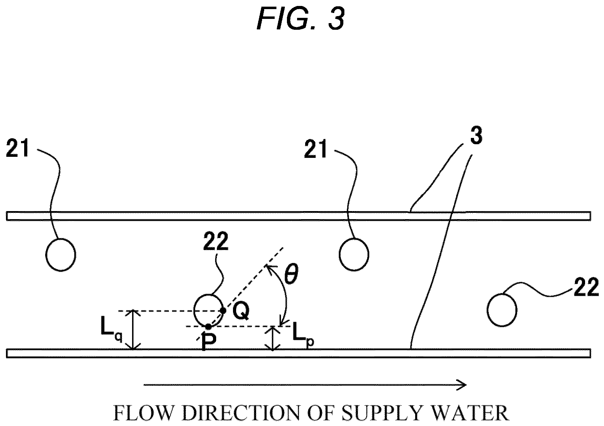

In addition, as illustrated in FIG. 3, in a cut surface of the fibrous material 21 or 22 on arbitrary plane 10 which is in a direction parallel to a flow direction of the supply water, does not pass through the intersection portion, and is in a direction perpendicular to a plane direction of the supply-side flow channel material, when a point, at which a distance between the separation membrane and a cut surface of at least one of the fibrous materials 21 and 22 other than the intersection portion is minimum, on an outer periphery of the cut surface is denoted by P, a point, at which a distance on the same side as the distance to the separation membrane is maximum, on the outer periphery of the cut surface downstream of the flow of the supply water with respect to the point P is denoted by Q, a distance between the point P and the separation membrane is denoted by Lₚ, a distance between the point Q and the separation membrane is denoted by L_{q}, and an elevation angle from the point P to the point Q is denoted by θ [°], a relation of θ × (1 - Lₚ/L_{q})² > 15 is satisfied in a portion of 50% or more of the fibrous material other than the intersection portions of the supply-side flow channel material.

In general, a gradual enlargement loss coefficient of a fluid traveling through a circular tube whose pipe diameter gradually changes from D₁ to D₂ at an expansion angle φ is proportional to φ^{1.22} (1 - D₁/D₂)² in a range of 7.5° < φ < 35° according to "Introduction to Fluid Mechanics Learned in Exercise, Second Edition" (2018).

In the present application, the range of φ is empirically not particularly limited and it is approximated as being proportional to (1 - D₁/D₂)². As the gradual enlargement loss coefficient increases, the separation of the flow from the membrane surface is promoted, and a vortex is easily formed on the membrane surface behind the fibrous material. That is, a low-speed region of the membrane surface is reduced, and concentration polarization can be prevented. Since (1 - Lₚ/L_{q})² ≤ 1 is satisfied, θ × (1 - Lₚ/L_{q})² ≤ 15 is established in the case of θ ≤ 15°. Therefore, the above relation is not satisfied.

On the other hand, if θ > 15°, it is determined whether the above relation is satisfied by a value of Lₚ/L_{q} as rate-limiting factor. In order to easily form a vortex on the membrane surface behind the fibrous material, a value of θ is preferably 20° or more, and more preferably 45° or more.

It is preferable to satisfy the relation of θ × (1 - Lₚ/L_{q})² > 20 and θ > 43°, and it is more preferable to satisfy a relation of θ × (1 - Lₚ/L_{q})² > 24 and θ > 46°. A vortex is more easily formed on the membrane surface behind the fibrous material, an effect of preventing higher concentration polarization is obtained, and an excellent water production amount and an excellent removal rate are obtained.

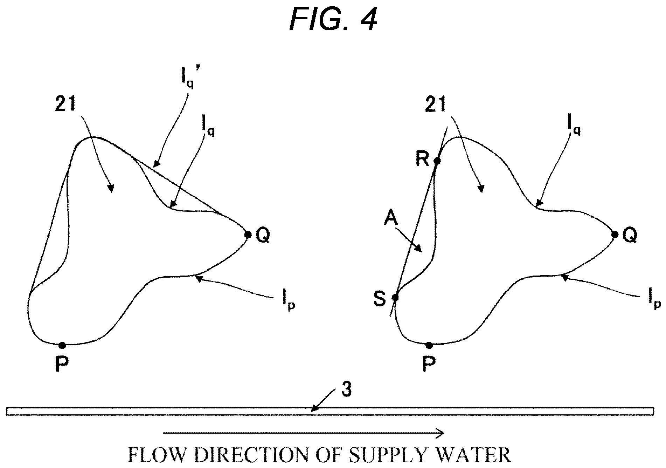

In order to prevent a decrease in an amount of a permeated water due to pressure loss, it is preferable that the cross-sectional peripheral surface of the fibrous material on a side close to a supply-side flow channel center line has a shape that is free of chips. Therefore, when a ratio of an area of the cut surface to an area of a figure formed by an outer periphery lₚ and a line segment l_{q}' that convexly encapsulates an outer periphery l_{q}, where the outer periphery lₚ is an outer periphery connecting the point P and the point Q on a side close to the separation membrane surface and the outer periphery l_{q} is an outer periphery connecting the point P and the point Q on a side far from the separation membrane surface in the cut surface, is denoted by α, a relation of α ≥ 70% is satisfied. More preferably, a relation of α ≥ 90% is satisfied. In the present description, the "line segment that convexly encapsulates" refers to an outer periphery of a figure that covers a given shape without a recess. Specifically, as illustrated in FIG. 4, in arbitrary point R on the outer periphery l_{q} at which a circumscribed line can be drawn, in a case where the circumscribed line intersects with the outer periphery at a point S other than the point R, when a figure formed by a line segment RS and the outer periphery is denoted by A, a portion not overlapping the outer periphery lₚ in an outer periphery of a sum set of A obtained by performing this operation on all the points R can be obtained as the line segment l_{q}'.

### (Form of Supply-Side Flow Channel Material)

The fibrous material 21 and the fibrous material 22 constituting the supply-side flow channel material are preferably not parallel to (preferably oblique to) the water collection pipe. It is preferable that the fibrous material is oblique to the water collection pipe because an increase in the membrane surface salt concentration of the separation membrane surface near the fibrous material is inhibited, and concentration polarization can be prevented.

### (Thickness of Supply-Side Flow Channel Material)

A thickness D_{C} of the supply-side flow channel material is a value obtained by observing longitudinal sections parallel to the fibrous rows and measuring a thickness of the thickest portion. In the present embodiment, the intersection portion is formed of fibers having a diameter larger than that of fibers forming portions other than the intersection portion,and therefore the thickness of the supply-side flow channel material has the same meaning as the thickness of the intersection portion.

In the present embodiment, an average thickness of the supply-side flow channel material is preferably 0.30 mm or more and 4.0 mm or less, and more preferably 0.45 mm or more and 2.0 mm or less. When the average thickness of the supply-side flow channel material is within this range, the pressure loss is not too large, it is possible to ensure a sufficient supply-side flow channel that is not easily clogged with substances such as foulants that may be deposited on the membrane surface or the supply-side flow channel material. In addition, it is possible to prevent clogging of the supply-side flow channel due to foulants such as microorganisms and impurities in the supply water, and it is possible to stably operate the separation membrane element over a long period of time without increasing the required power of the pump. The thickness of the supply-side flow channel material smaller than this range may cause that the pressure loss increases and fouling is likely to proceed. When the supply-side flow channel material is larger than this range, the area of the separation membrane that can be mounted on the separation membrane element having a predetermined outer diameter is extremely reduced, and sufficient water permeability of the separation membrane element is not exhibited.

Using a commercially available microscope or an X-ray CT measurement device, the thickness of the supply-side flow channel material can be measured by observing longitudinal sections parallel to the fibrous rows and measuring the distance thereof to determine the thickness. The thickness of the intersection portion or the supply-side flow channel material is measured at arbitrary 30 positions using a measurement mode and an average value thereof is obtained as the thickness.

The variation in the thickness of the supply-side flow channel material is preferably 0.85 times or more and 1.15 times or less the average thickness of the supply-side flow channel material. When the variation in the thickness of the supply-side flow channel material is within this range, the supply water can be uniformly supplied to the separation membrane element, so that the performance of the separation membrane can be uniformly exhibited.

### (Distance between Supply-Side Flow Channel Material and Separation Membrane)

As illustrated in FIG. 2, a distance L_{P} between the supply-side flow channel material and the separation membrane indicates a gap between the fibrous material and the separation membrane when the supply-side flow channel material is cut at arbitrary plane 10 that does not pass through the intersection portion among planes in a direction parallel to the flow direction of the supply water and perpendicular to the plane direction of the supply-side flow channel material and viewed from a direction perpendicular to the cut surface. At this time, the distance L_{P} is 15% or less of the thickness of the supply-side flow channel.

In addition, the distance L_{P} is preferably 10% or less of the thickness of the supply-side flow channel, more preferably 2% or more and 8% or less thereof, and still more preferably 5% or more and 7% or less thereof. When the distance L_{P} is within this range, it is possible to efficiently form a spiral flow on the membrane surface and prevent salt concentration polarization in a membrane surface.

The distance L_{P} is measured by directly observing the separation membrane element using X-ray CT. At least arbitrary 10 cross-sections in a direction parallel to the flow direction of the supply water and not passing through the intersection portion P were cut out, the distance L_{P} was measured on each plane, and an average value thereof was determined.

### (Distance between Supply-Side Flow Channel Material and Supply-Side Flow Channel Center Line)

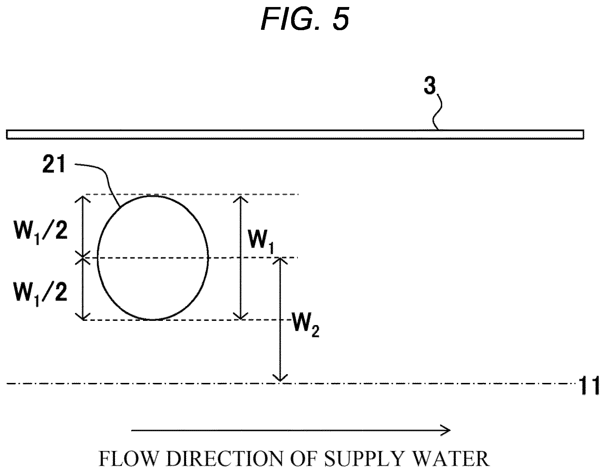

FIG. 5 is a view seen from a cross-sectional direction of the fibrous material 21 cut along the plane 10 in FIG. 2, and a distance between the supply-side flow channel material and the supply-side flow channel center line is represented by W₂ - W₁/2 obtained by dividing W₁ into two equal parts and subtracting a half length of W₁ from a distance W₂ between a straight line parallel to the flow direction of the supply water and the supply-side flow channel center line 11. The supply-side flow channel center line is a straight line that bisects the distance between separation membranes and is parallel to the flow direction of the supply water. It is preferable that W₂ - W₁/2 ≥ 0, that is, the fibrous material is not present on the supply-side flow channel center line 11 because the pressure loss of the supply water can be reduced. It is more preferable that W₂ - W₁/2 > 0.

### (Interval between Intersection Portions)

In the present embodiment, an interval c between intersection portions (intersection portion period) in a direction perpendicular to a supply water flow direction (raw water flow direction) of the supply-side flow channel material 2 illustrated in FIG. 2 is preferably in a range of 3 mm or more and 5 mm or less, and more preferably in a range of 3.5 mm or more and 4.5 mm or less. When the interval c between intersection portions of the supply-side flow channel material in the direction perpendicular to the supply water flow direction is within this range, a phenomenon in which the separation membrane falls into a gap portion of the supply-side flow channel material during the production of the separation membrane element can be prevented, and in particular, the flow channel in a supply water inflow end surface portion can be stably formed.

In addition, an interval d between intersection portions of the supply-side flow channel material in a direction parallel to the supply water flow direction is preferably in a range of 5 times or more and 10 times or less, and more preferably in a range of 5 times or more and 7 times or less, or 8 times or more and 10 times or less the thickness D_{C} of the supply-side flow channel material. When the interval d between intersection portions of the supply-side flow channel material in a direction parallel to the supply water flow direction is within this range, the balance between the turbulence intensity of the supply water and the pressure loss can be achieved, and thus a desalination rate and the water production of the separation membrane element can be improved. When d is 5 times or more and 7 times or less the D_{C}, the turbulence intensity of the supply water is particularly increased, and when d is 8 times or more and 10 times or less the D_{C}, the pressure loss can be particularly reduced. The interval d between intersection portions can be appropriately selected according to the characteristics required for the application.

As a method of measuring the interval between intersection portions, the supply-side flow channel material can be observed from an upper portion in the thickness direction (that is, a plane of the supply-side flow channel material), and the distance can be measured by, for example, a microscope.

### (Angle between Supply Water Flow Direction and Fibrous Material)

When the supply-side flow channel material is observed from a plane, the turbulence intensity increases as an angle between the supply water flow direction (that is, the longitudinal direction of the water collection pipe) and the fibrous material increases, but the pressure loss tends to increase. Therefore, the angle is preferably 10° or more and 50° or less, and more preferably 20° or more and 45° or less.

### (Cross-Sectional Shape of Fiber)

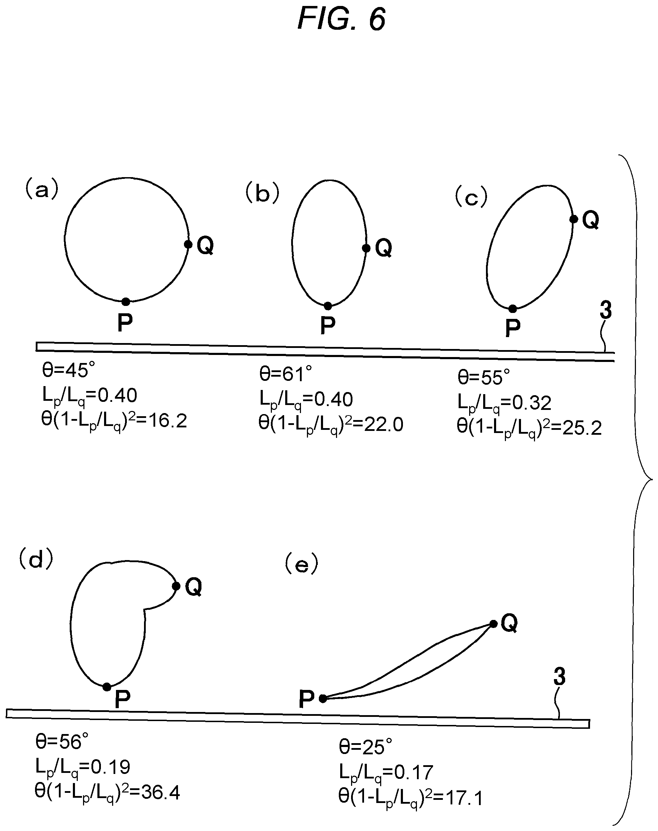

(a) to (e) of FIG. 6 are cross-sectional views illustrating examples of a supply-side flow channel material of the present embodiment in a plane parallel to a supply water flow direction and perpendicular to a plane direction of the supply-side flow channel material. Although the supply water flow direction is from left to right, there is no problem even if the supply water flow direction is from right to left in the symmetrical shape ((a) to (c) of FIG. 6). The cross-sectional shape in the cross section perpendicular to the longitudinal direction of the fibers of the supply-side flow channel material needs to satisfy θ > 15°, and examples thereof include a shape based on a perfect circle, a longitudinal ellipse, or a spindle shape as illustrated in FIG. 6. Further, as illustrated in (d) of FIG. 6, when a protrusion is present at the rear portion in the supply water flow direction, the separation of the flow from the membrane surface is further promoted, and the vortex is easily formed on the membrane surface behind the fibrous material. In addition, in order to prevent generation of a retention site between the supply-side flow channel material and the separation membrane surface, it is preferable that an inclination of a tangent line at all points on the outer periphery lₚ is always -20° or more with respect to the separation membrane.

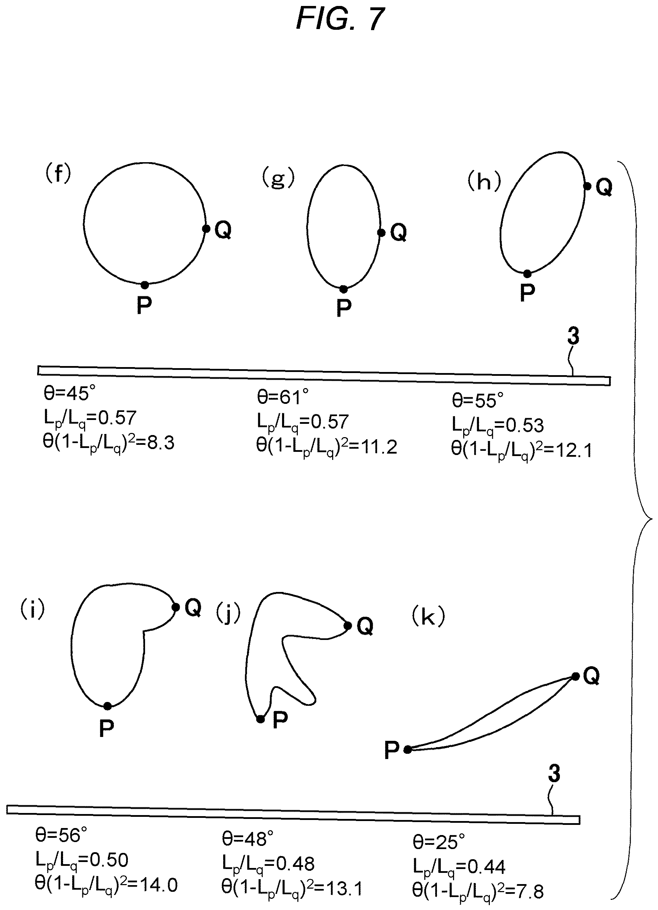

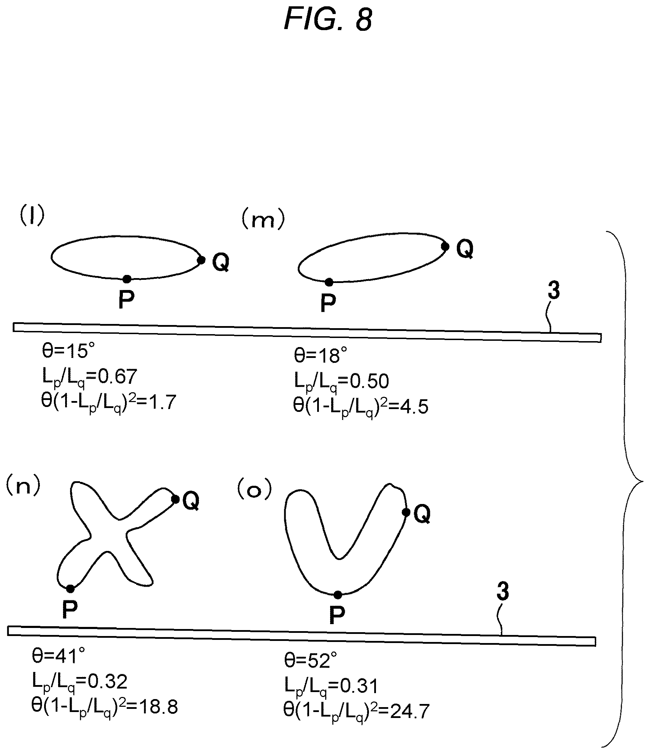

(f) to (k) of FIG. 7 and (1) to (o) of FIG. 8 are cross-sectional views illustrating examples of the supply-side flow channel material out of the present embodiment in a plane parallel to the supply water flow direction and perpendicular to a plane direction of the supply-side flow channel material. Although the supply water flow direction is from left to right, there is no problem even if the supply water flow direction is from right to left in the symmetrical shape ((f) and (g) of FIG. 7, and (1) of FIG. 8). (f) to (h), (i), and (k) of FIG. 7 have the same cross-sectional shapes as (a) to (e) of FIG. 6, but θ × (1 - Lₚ/L_{q})² ≤ 15 is satisfied because Lₚ/_{Lq} is large. On the other hand, as illustrated in (l) of FIG. 8, in the horizontal elliptical shape of θ ≤ 15°, 0 × (1 - Lₚ/L_{q})² ≤ 15 is satisfied regardless of the value of Lₚ/_{Lq}, and therefore, the shape is out of the range of the present embodiment.

### (Material)

The material of the supply-side flow channel material is not particularly limited, but from the viewpoint of moldability, a thermoplastic resin is preferable, and in particular, polyethylene and polypropylene are preferable because they hardly damage the surface of the separation membrane and are inexpensive. In the supply-side flow channel material, the fibrous material 21 and the fibrous material 22 may be formed of the same material, or may be formed of different materials.

### (Production Method)

In the molding of the net-shaped supply-side flow channel material, in general, while two spinnerets of an inner spinneret and an outer spinneret in which a large number of holes are arranged on two circumferences of an inner circumference and an outer circumference are rotated in reverse directions, a molten resin is supplied from an extruder. When or immediately after the resin comes out of the spinnerets, yarns coming out of the inner and outer spinnerets are caused to intersect with each other in a molten state and are melted to form a mesh structure. At this stage, the net is formed in a tubular shape. After that, the tubular net is cooled and solidified to determine the thickness, the yarn diameter, and the interval between intersection portions, and then cut open and collected as a sheet-shaped net. The size and shape of the hole of the spinneret determine the thickness of the supply-side flow channel material and the shape of the fibrous material, and the interval between the holes of the spinneret and the balance between a line speed of the spinneret and the conveyance speed determine the interval between intersection portions and the angle between the supply water flow direction and the fibrous material. It is also possible to narrow only the yarn diameter between the intersection points while maintaining the yarn diameter at the intersection points by appropriately drawing the sheet-shaped net while heating it. A ratio of the yarn diameter between an intersection point and an intersection point and the change in the yarn diameter in one fibrous material can be controlled by the material, the heating temperature, the drawing direction, and the drawing ratio.

As in the present embodiment, in order to produce a supply-side flow channel material in which a large-diameter portion and a small-diameter portion are present in the fibrous material 21 or the fibrous material 22, and an intersection point is formed between the small-diameter portion of the fibrous material 21 or the fibrous material 22 and the other fibrous material, it is possible to adopt a method in which a resin is supplied at a predetermined resin discharge pressure while rotating, in reverse directions, two spinnerets of an inner spinneret and an outer spinneret in which a large number of holes are arranged, a tubular net having a mesh structure is molded, cooled, and solidified, and then longitudinal drawing and lateral drawing are sequentially performed in a heating furnace.

The method of producing the net of the present embodiment is not limited thereto, and the net may be produced by a method of compressing and deforming the fibrous material between the intersection portions by embossing, imprinting, a pressing method, or the like, a method of casting and taking out the molten resin in a mold, or a method using a 3D printer.

### <Permeation-Side Flow Channel>

### (Permeation-Side Flow Channel Material)

In the envelope-shaped membrane 5, the separation membranes 3 are stacked with the surfaces on the permeation side facing each other, the permeation-side flow channel material 4 is disposed between the separation membranes 3, and a permeation-side flow channel is formed by the permeation-side flow channel material 4. The material of the permeation-side flow channel material is not limited, and tricot or nonwoven fabric, a porous sheet to which protrusions are fixed, a film subjected to concave-convex molding and perforation, or concave-convex nonwoven fabric can be used. Further, a protrusion functioning as the permeation-side flow channel material may be fixed to the permeation side of the separation membrane.

### <Formation of Separation Membrane Leaf>

A separation membrane leaf may be formed by folding a separation membrane such that a surface on a supply side faces inward, or may be formed by overlapping two separate separation membranes such that surfaces on the supply side face each other and sealing the periphery of the separation membrane.

Examples of the "sealing" method include adhesion by an adhesive or hot melting, fusion by heating or lasers, and a method of sandwiching a rubber sheet. Sealing by the adhesion is particularly preferable because it is the simplest and highly effective.

### <Use of Separation Membrane Element>

The separation membrane element may be used as a separation membrane module by being connected in series or in parallel and housed in a pressure container.

The separation membrane element and the separation membrane module, in combination with a pump for supplying a fluid thereto, a device for pretreating the fluid, and the like, can implement a fluid separation device. By using this separation device, for example, the supply water can be separated into permeated water such as drinking water and concentrated water which does not permeate the membrane to obtain intended water.

In consideration that, as the operating pressure of the fluid separation device increases, the removal rate increases, but energy required for the operation also increases, and in consideration of retention of the supply flow channel and the permeation flow channel of the separation membrane element, the operating pressure when the supply water permeates the separation membrane module is preferably 0.2 MPa or more and 6 MPa or less.

The temperature of the supply water is preferably 5°C or higher and 45°C or lower since the salt removal rate decreases as the temperature increases and a membrane permeation flux decreases as the temperature decreases.

In addition, in the case where the pH of the raw water is in the neutral range, even if the raw water is a liquid having a high salt concentration such as seawater, generation of scale such as magnesium is prevented, and deterioration in the membrane is also prevented.

### (Supply Water)

The supply water to the separation membrane element of the present embodiment is not particularly limited, and may be tap water treated in advance, or may be water containing a large amount of impurities in the solution, such as seawater, brackish water, and sewage water. For example, when the separation membrane element is used for water treatment, examples of the raw water (supply water) include a liquid mixture containing 500 mg/L or more and 100 g/L or less of total dissolved solids (TDS) such as seawater, brackish water, and wastewater. In general, TDS refers to an amount of the total dissolved solids and is represented by "mass/volume". Sometimes TDS is represented by "mass ratio" when 1 L is regarded as 1 kg. According to the definition, the total dissolved solids can be calculated from a weight of residue obtained by evaporating, at a temperature of 39.5°C to 40.5°C, a solution filtered through a filter of 0.45 µm and is more conveniently converted from practical salinity (S).

### Examples

Hereinafter, the present invention will be described in more detail with reference to Examples, but the present invention is not limited to these Examples.

### (Measurement of Thickness of Supply-Side Flow Channel Material)

Using a shape measurement system (for example, a high-precision shape measurement system "KS-1100" manufactured by Keyence Corporation), a longitudinal section parallel to a fibrous row of a supply-side flow channel material was observed at a magnification of 20 times, a thickness of the supply-side flow channel material was measured at 30 locations, and an average value thereof was calculated.

### (Cross-Section Yarn Diameter of Supply-Side Flow Channel Material)

The supply-side flow channel material was cut along arbitrary plane 10 in a direction parallel to a flow direction of supply water and not passing through an intersection portion, observed from a direction perpendicular to the cut surface using a shape measurement system (for example, a high-precision shape measurement system "KS-1100" manufactured by Keyence Corporation), and W₁ was measured.

Arbitrary plane 10 was cut out for at least 10 locations, W₁ was measured on each plane, and an average value thereof was determined.

### (Distance between Supply-Side Flow Channel Material and Supply-Side Flow Channel Center Line)

A separation membrane element was cut from a position of 6 inches to a position of 12 inches from an end portion in a direction perpendicular to a longitudinal direction of a water collection pipe, and a cylindrical sample having a length of 6 inches was cut out. In order not to break the flow channel structure, an adhesive was applied to the entire surface from both sides of a cut surface of the element, and the element was slightly impregnated with the adhesive from the end portion of the element. The cylindrical sample was cut into a columnar body having a fan shape with a central angle of 60 degrees on a bottom surface to obtain an observation sample. Thereafter, the fan-shaped sample was dried in a vacuum oven set at 40°C until the weight change of the fan-shaped sample was eliminated. A 3D image was obtained by performing scanning under the conditions of a tube current of 100 µA, a tube voltage of 150 kV, and a resolution of 19.8 µm using an X-ray CT measurement device Phoenix v |tome| x m300 manufactured by GE. Thereafter, analysis was performed with VGSTUDIO MAX manufactured by VOLUME GRAPHICS, and W₂ was measured. Arbitrary plane 10 was cut out for at least 10 locations, W₂ was measured on each plane, and an average value thereof was determined.

### (Distance Between Supply-Side Flow Channel Material and Separation Membrane, θ, and α)

A separation membrane element was cut from a position of 6 inches to a position of 12 inches from an end portion in a direction perpendicular to a longitudinal direction of a water collection pipe, and a cylindrical sample having a length of 6 inches was cut out. In order not to break the flow channel structure, an adhesive was applied to the entire surface from both sides of a cut surface of the element, and the element was slightly impregnated with the adhesive from the end portion of the element. The cylindrical sample was cut into a columnar body having a fan shape with a central angle of 60 degrees on a bottom surface to obtain an observation sample. Thereafter, the fan-shaped sample was dried in a vacuum oven set at 40°C until the weight change of the fan-shaped sample was eliminated. A 3D image was obtained by performing scanning under the conditions of a tube current of 100 µA, a tube voltage of 150 kV, and a resolution of 19.8 µm using an X-ray CT measurement device Phoenix v |tome| x m300 manufactured by GE. Thereafter, analysis was performed with VGSTUDIO MAX manufactured by VOLUME GRAPHICS, and the distance Lₚ, L_{q} and the elevation angle θ from the point P to the point Q were measured. Arbitrary plane 10 was cut out for at least 10 locations, the distance Lₚ, L_{q} and the elevation angle θ were measured on each plane, and an average value thereof was determined. In addition, with respect to the cross-sectional view of the obtained fibrous material, α was measured using ImageJ ver. 1.45 (developer: Wayne Rasband, National Institutes of Health, NIH), and an average value of 10 locations was determined.

### (Interval between Intersection Portions)

Using a shape measurement system (for example, a high-precision shape measurement system "KS-1100" manufactured by Keyence Corporation), a net-shaped sample was observed from the upper side in the thickness direction at a magnification of 20 times, and regarding an interval between intersection portions of the supply-side flow channel material in a direction perpendicular to the supply water flow direction and an interval between intersection portions of the supply-side flow channel material in a direction parallel to the supply water flow direction, the interval between intersection portions was measured at each of arbitrary 30 locations, and an average value thereof was calculated.

### <Examples>

### (Production of Supply-Side Flow Channel Material S)

Using polypropylene as a material, a molten resin was supplied from an extruder at a predetermined discharge pressure while rotating, in reverse directions, two spinnerets of an inner spinneret and an outer spinneret having a large number of small holes arranged therein, and thus a tubular net having a mesh structure was formed. The tubular net was cooled and solidified, and then was subjected to a method of sequentially performing longitudinal drawing and lateral drawing in a heating furnace, and a supply-side flow channel material shown in Table 1 was produced. The shape and size of the holes of the spinneret, the discharge pressure of molten resin from the extruder, the collection speed, the longitudinal drawing and lateral drawing ratio, and the temperature in the heating furnace were changed, and the structure was controlled so as to finally obtain the shape of the supply-side flow channel material shown in Table 1.

### (Production of Supply-Side Flow Channel Material T)

Using polypropylene as a material, a molten resin was supplied from an extruder while rotating, in reverse directions, two spinnerets of an inner spinneret and an outer spinneret having a large number of holes arranged therein, and a tubular net having a mesh structure was formed, thereby producing a net with a cylindrical fiber shape. The shape and size of the holes of the spinneret, the discharge pressure of molten resin from the extruder, and the collection speed were changed, and the structure was controlled so as to finally obtain the shape of the supply-side flow channel material shown in Table 3.

### (Production of Separation Membrane U)

A DMF solution of polysulfone of 16.0 mass% was cast at a thickness of 180 µm at room temperature (25°C) on a nonwoven fabric (fineness: 1 dtex, thickness: about 90 µm, air permeability: 1 cc/cm²/sec, density: 0.80 g/cm³) made of polyethylene terephthalate fibers, and the nonwoven fabric was immediately immersed in pure water and left for 5 minutes, and then immersed in hot water at 80°C for 1 minute to produce a porous support layer (thickness: 130 µm) roll made of a fiber-reinforced polysulfone support membrane.

Thereafter, a surface of a polysulfone layer of the porous support membrane was immersed in an aqueous solution containing 1.5 mass% of m-PDA and 1.0 mass% of ε-caprolactam for 2 minutes, followed by slowly pulling up in a vertical direction. Further, the excess aqueous solution was removed from the surface of the support membrane by blowing nitrogen from an air nozzle.

Thereafter, an n-decane solution containing 0.08 mass% of trimesoyl chloride was applied so as to completely wet the surface of the membrane, and then left to stand for 1 minute. Thereafter, excess solution was removed from the membrane with an air blower, and the membrane was washed with hot water at 80°C for 1 minute to obtain a composite separation membrane roll of the separation membrane U.

### (Production of Separation Membrane V)

A DMF solution of polysulfone of 16.0 mass% was cast at a thickness of 180 µm at room temperature (25°C) on a nonwoven fabric (fineness: 1 dtex, thickness: about 90 µm, air permeability: 1 cc/cm²/sec, density: 0.80 g/cm³) made of polyethylene terephthalate fibers, and the nonwoven fabric was immediately immersed in pure water and left for 5 minutes, and then immersed in hot water at 80°C for 1 minute to produce a porous support layer (thickness: 130 µm) roll made of a fiber-reinforced polysulfone support membrane.

Thereafter, a surface of a polysulfone layer of the porous support membrane was immersed in an aqueous solution containing 3.0 mass% of m-PDA and 2.0 mass% of ε-caprolactam for 2 minutes, followed by slowly pulling up in a vertical direction. Further, the excess aqueous solution was removed from the surface of the support membrane by blowing nitrogen from an air nozzle.

Thereafter, an n-decane solution containing 0.15 mass% of trimesoyl chloride was applied so as to completely wet the surface of the membrane, and then left to stand for 1 minute. Thereafter, excess solution was removed from the membrane with an air blower, and the membrane was washed with hot water at 80°C for 1 minute to obtain a composite separation membrane roll of the separation membrane V.

### (Production of Spiral-Type Separation Membrane Element)

The separation membrane U or V was folded and cut such that an effective area in the separation membrane element was 8 m², and a polypropylene net (thickness: 0.8 mm) shown in Table 1 was sandwiched as a supply water-side flow channel material to produce a separation membrane leaf.

Tricot (thickness: 0.26 mm) shown in Table 1 was stacked as a permeation-side flow channel material on a permeation-side surface of the obtained separation membrane leaf, a leaf adhesive was applied, and the resultant was spirally wound around a water collection pipe (width: 1016 mm, diameter: 19 mm, number of holes: 23 × one straight line row) made of polyvinyl chloride (PVC). An outer peripheral surface of a wound body was fixed with a tape, then edge cutting at both ends and end plate attachment were performed, and a separation membrane element having a diameter of 4 inches in which supply water was supplied from one side surface and concentrated water was discharged was produced.

### (Water Production Amount)

After the operation was performed for 2 hours under the following conditions, sampling was performed for 1 minute, and an amount of water permeated per day (Gallon) was represented as a water production amount (GPD (Gallon/day)).

### (Condition A)

The separation membrane element produced using the separation membrane U was placed in a pressure container, and a saline solution having a temperature of 25°C and a concentration of 2000 mg/L and a NaCl aqueous solution having a pH of 7.0 were used as supply water. An operation pressure was 1.55 MPa, and a recovery rate was 15%.

### (Condition B)

The separation membrane element produced using the separation membrane V was placed in a pressure container, and a saline solution having a temperature of 25°C and a concentration of 32000 mg/L and a NaCl aqueous solution having a pH of 7.0 were used as supply water. An operation pressure was 5.52 MPa, and a recovery rate was 8%.

### (Removal Rate (TDS Removal Rate))

Regarding the supply water and the sampled permeated water used in the operation for 1 minute in the measurement of the water production amount, the TDS concentration was determined by a conductivity measurement, and the TDS removal rate was calculated based on the following formula. TDS removal rate (%) = 100 × {1 - (TDS concentration of permeated water/TDS concentration of supply water)}

### (Element Differential Pressure)

An upstream side (supply water side) and a downstream side (concentrated water side) of a cylindrical pressure container loaded with the separation membrane element were connected by a pipe via a differential pressure gauge (model DG16) manufactured by Nagano Keiki Co., Ltd., and the element differential pressure during operation was measured. The operation conditions were a supply water flow rate of 9 L/min and an operation pressure of 1.0 MPa, and reverse osmosis membrane treated water was used as the supply water. After the air bubbles in the element were removed, a cock of the permeated water pipe was closed, and an operation was performed in a state where membrane filtration could not be substantially performed, that is, in a state where the entire amount of supply water was discharged as concentrated water, to measure the element differential pressure (kPa).

### (Example 1)

When the produced separation membrane element was placed in a pressure container and evaluated under the above-described conditions, the results were as shown in Table 1. Note that θ, Lₚ, L_{q}, W₁, W₂, α, and d were the same values in the fibrous materials 21 and 22. The value of D_{c} was equal to the thickness of the supply-side flow channel.

### (Examples 2 to 13)

Separation membrane elements were produced in the same manner as in Example 1 except that the supply-side flow channel materials were as shown in Tables 1 and 2. Note that θ, Lₚ, L_{q}, W₁, W₂, α, and d were the same values in the fibrous materials 21 and 22. The value of D_{c} was equal to the thickness of the supply-side flow channel.

When the separation membrane element was placed in a pressure container and each performance was evaluated under the same conditions as in Example 1, the results are as shown in Tables 1 and 2.

### <Comparative Example>

### (Comparative Examples 1 to 6)

Separation membrane elements were produced in the same manner as in Example 1 except that the supply-side flow channel materials were as shown in Table 3. Note that θ, Lₚ, L_{q}, W₁, W₂, α, and d were the same values in the fibrous materials 21 and 22. The value of D_{c} was equal to the thickness of the supply-side flow channel.

When the separation membrane element was placed in a pressure container and each performance was evaluated under the above-described conditions, the results were as shown in Table 3.

**Table 1**

| | | | Ex. 1 | Ex. 2 | Ex. 3 | Ex. 4 | Ex. 5 | Ex. 6 | Ex. 7 |
|---|---|---|---|---|---|---|---|---|---|
| Supply-side flow channel material | Type | | S | S | S | S | S | S | S |
| | Intersection pattern of fibrous material with respect to water collection pipe | | Oblique | Oblique | Oblique | Oblique | Oblique | Parallel | Oblique |
| | θ (°) | | 65 | 55 | 45 | 45 | 45 | 45 | 45 |
| | Lₚ (mm) | | 0.075 | 0.075 | 0.075 | 0.075 | 0.075 | 0.075 | 0.075 |
| | L_{q} (mm) | | 0.235 | 0.235 | 0.235 | 0.235 | 0.235 | 0.235 | 0.235 |
| | θ×(1-Lₚ/L_{q})² | | 30 | 25 | 21 | 21 | 21 | 21 | 21 |
| | Thickness D_{C} (mm) | | 0.80 | 0.80 | 0.80 | 0.80 | 0.80 | 0.80 | 0.80 |
| | Lₚ/D_{C} | | 0.09 | 0.09 | 0.09 | 0.09 | 0.09 | 0.09 | 0.09 |
| | α (%) | | 95 | 95 | 95 | 95 | 95 | 95 | 85 |
| | W₂-W₁/2 (mm) | | 0.005 | 0.005 | 0.005 | 0.005 | 0.005 | 0.005 | 0.005 |
| | Interval d (mm) between intersection points in flow direction of supply water | | 5.0 | 5.0 | 5.0 | 7.2 | 5.0 | 5.0 | 5.0 |
| | d/Dc (-) | | 6.3 | 6.3 | 6.3 | 9.0 | 6.3 | 6.3 | 6.3 |
| | Presence or absence of protrusion at rear portion in flow direction of supply water | | absent | absent | absent | absent | absent | absent | absent |
| | Ratio (%) of fibrous materials satisfying θ × (1 - Lₚ/L_{q})² > 15, a ≥ 70%, and Lₚ/D_{C} ≤ 0.15 | | 70 | 70 | 70 | 70 | 55 | 70 | 70 |
| | Minimum inclination (°) of tangent at point on Iₚ to separation membrane | | 0 | 0 | 0 | 0 | 0 | 0 | 0 |
| | Yarn diameter (mm) at intersection portion | | 0.40 | 0.40 | 0.40 | 0.40 | 0.40 | 0.40 | 0.40 |
| | Yarn diameter (mm) of portion other than intersection portion | | 0.32 | 0.32 | 0.32 | 0.32 | 0.32 | 0.32 | 0.32 |
| Performance evaluation | Condition A | Water production amount (GPD) | 2500 | 2490 | 2480 | 2485 | 2475 | 2460 | 2475 |
| | | Removal rate (%) | 99.87 | 99.86 | 99.86 | 99.87 | 99.83 | 99.76 | 99.86 |
| | | Element differential pressure (kPa) | 9 | 9 | 9 | 6 | 11 | 7 | 14 |
| | Condition B | Water production amount (GPD) | 1750 | 1735 | 1725 | 1705 | 1705 | 1655 | 1725 |
| | | Removal rate (%) | 99.86 | 99.83 | 99.81 | 99.80 | 99.79 | 99.73 | 99.82 |

**Table 2**

| | | | Ex. 8 | Ex. 9 | Ex. 10 | Ex. 11 | Ex. 12 | Ex. 13 |
|---|---|---|---|---|---|---|---|---|
| Supply-side flow channel material | Type | | S | S | S | S | S | S |
| | Intersection pattern of fibrous material with respect to water collection pipe | | Oblique | Oblique | Oblique | Oblique | Oblique | Oblique |
| | θ (°) | | 45 | 47 | 45 | 45 | 45 | 45 |
| | Lₚ (mm) | | 0.075 | 0.055 | 0.075 | 0.075 | 0.075 | 0.075 |
| | L_{q} (mm) | | 0.235 | 0.215 | 0.235 | 0.235 | 0.235 | 0.185 |
| | θ×(1-Lₚ/L_{q})² | | 21 | 26 | 21 | 21 | 21 | 16 |
| | Thickness D_{C} (mm) | | 0.80 | 0.80 | 0.80 | 0.80 | 0.80 | 0.80 |
| | Lₚ/D_{C} | | 0.09 | 0.07 | 0.09 | 0.09 | 0.09 | 0.09 |
| | α (%) | | 95 | 95 | 95 | 95 | 95 | 95 |
| | W₂-W₁/2 (mm) | | 0.005 | 0.005 | 0.005 | 0.000 | -0.005 | 0.005 |
| | Interval d (mm) between intersection points in flow direction of supply water | | 5.0 | 5.0 | 5.0 | 5.0 | 5.0 | 5.0 |
| | d/Dc (-) | | 6.3 | 6.3 | 6.3 | 6.3 | 6.3 | 6.3 |
| | Presence or absence of protrusion at rear portion in flow direction of supply water | | absent | absent | present | absent | absent | absent |
| | Ratio (%) of fibrous materials satisfying θ × (1 - Lₚ/L_{q})² > 15, α ≥ 70%, and Lₚ/D_{C} 5 0.15 | | 70 | 70 | 70 | 70 | 70 | 70 |
| | Minimum inclination (°) of tangent at point on Iₚ to separation membrane | | -25 | 0 | 0 | 0 | 0 | 0 |
| | Yarn diameter (mm) at intersection portion | | 0.40 | 0.40 | 0.40 | 0.40 | 0.40 | 0.40 |
| | Yarn diameter (mm) of portion other than intersection portion | | 0.32 | 0.32 | 0.32 | 0.32 | 0.32 | 0.32 |
| Performance evaluation | Condition A | Water production amount (GPD) | 2465 | 2485 | 2490 | 2420 | 2410 | 2465 |
| | | Removal rate (%) | 99.80 | 99.87 | 99.88 | 99.78 | 99.76 | 99.78 |
| | | Element differential pressure (kPa) | 9 | 9 | 9 | 12 | 15 | 9 |
| | Condition B | Water production amount (GPD) | 1675 | 1730 | 1735 | 1620 | 1610 | 1717 |
| | | Removal rate (%) | 99.75 | 99.82 | 99.83 | 99.69 | 99.67 | 99.73 |

**Table 3**

| | | | Comp. Ex. 1 | Comp. Ex. 2 | Comp. Ex. 3 | Comp. Ex. 4 | Comp. Ex. 5 | Comp. Ex. 6 |
|---|---|---|---|---|---|---|---|---|
| Supply-side flow channel material | Type | | S | T | S | S | S | S |
| | Intersection pattern of fibrous material | | Oblique | Oblique | Oblique | Oblique | Oblique | Oblique |
| | θ (°) | | 25 | 45 | 45 | 45 | 40 | 45 |
| | Lₚ (mm) | | 0.075 | 0.000 | 0.075 | 0.075 | 0.075 | 0.14 |
| | L_{q} (mm) | | 0.235 | 0.198 | 0.235 | 0.235 | 0.235 | 0.34 |
| | θ×(1-Lₚ/L_{q})² | | 12 | 45 | 21 | 21 | 19 | 16 |
| | Thickness D_{C} (mm) | | 0.80 | 0.80 | 0.80 | 0.80 | 0.80 | 0.80 |
| | Lₚ/D_{C} | | 0.09 | 0.00 | 0.09 | 0.09 | 0.09 | 0.18 |
| | α (%) | | 95 | 95 | 95 | 65 | 90 | 95 |
| | W₂-W₁/2 (mm) | | 0.005 | 0.005 | 0.005 | 0.005 | 0.005 | 0.005 |
| | Interval d (mm) between intersection points in flow direction of supply water | | 5.0 | 5.0 | 5.0 | 5.0 | 5.0 | 5.0 |
| | d/D_{C} (-) | | 6.3 | 6.3 | 6.3 | 6.3 | 6.3 | 6.3 |
| | Presence or absence of protrusion at rear portion in flow direction of supply water | | absent | absent | absent | absent | absent | absent |
| | Ratio (%) of fibrous materials satisfying θ × (1 - Lₚ/L_{q})² > 15, a ≥ 70%, and Lₚ/D_{C} ≤ 0.15 | | 0 | 100 | 45 | 0 | 0 | 70 |
| | Minimum inclination (°) of tangent at point on Iₚ to separation membrane | | 0 | 0 | 0 | 0 | 0 | 0 |
| | Yarn diameter (mm) at intersection portion | | 0.40 | 0.40 | 0.40 | 0.40 | 0.40 | 0.40 |
| | Yarn diameter (mm) of portion other than intersection portion | | 0.32 | 0.40 | 0.32 | 0.32 | 0.32 | 0.32 |
| Performance evaluation | Condition A | Water production amount (GPD) | 2400 | 2320 | 2455 | 2255 | 2405 | 2455 |
| | | Removal rate (%) | 99.75 | 99.63 | 99.66 | 99.56 | 99.75 | 99.69 |
| | | Element differential pressure (kPa) | 11 | 9 | 11 | 30 | 11 | 9 |
| | Condition B | Water production amount (GPD) | 1600 | 1560 | 1605 | 1505 | 1605 | 1605 |
| | | Removal rate (%) | 99.65 | 99.60 | 99.62 | 99.51 | 99.65 | 99.62 |

As is clear from the results shown in Tables 1 to 3, the separation membrane elements of Examples 1 to 13 had excellent separation performance.

On the other hand, in Comparative Example 1, the cross-sectional shape of the fibrous material was different from that in Example 3, and θ × (1 - Lₚ/L_{q})² ≤ 15, and therefore, the water production amount and the removal rate were lower than those in Example 3. In Comparative Example 2, the yarn diameter of the fibrous material other than the intersection portion of the supply-side flow channel material and the yarn diameter of the intersection portion were equal to each other (Lₚ = 0) as compared with Example 3, and therefore, the water production amount and the removal rate were reduced as compared with Example 3. In Comparative Examples 3 and 5, the ratio of the fibrous material satisfying θ × (1 - Lₚ/L_{q})² > 15, α ≥ 70%, and Lₚ/D_{C} ≤ 0.15 was less than 50% as compared with Example 3, and therefore, the water production amount and the removal rate were reduced as compared with Example 3. In Comparative Example 4, α was less than 70% as compared with Example 3, and therefore, the pressure loss was increased, and the water production amount and the removal rate were reduced as compared with Example 3. In Comparative Example 6, the distance Lₚ was larger than 15% of the thickness D_{C} as compared with Example 3, and therefore, the water production amount and the removal rate were reduced as compared with Example 3.

Although various embodiments have been described above, the present invention is not limited to these examples. It is apparent to those skilled in the art that various variations or modifications can be conceived within the scope described in the claims, and it should be naturally understood that those belong to the technical scope of the present invention. In addition, the components described in the above embodiments may be combined freely without departing from the gist of the invention.

The present application is based on a Japanese patent application (Japanese Patent Application No. 2022-174183) filed on October 31, 2022, and the contents thereof are incorporated herein by reference.

### INDUSTRIAL APPLICABILITY

The membrane element of the present invention can be suitably used particularly for desalination of brackish water or seawater and utilization as an RO water purifier.

### REFERENCE SIGNS LIST

1: spiral-type separation membrane element
2: supply-side flow channel material
21: fibrous material (fibrous material A)
22: fibrous material (fibrous material B)
3: separation membrane
4: permeation-side flow channel material
5: envelope-shaped membrane
6: water collection pipe
7: supply water
8: permeated water
9: concentrated water
10: arbitrary plane that does not pass through intersection portion p among planes in a direction parallel to flow direction of supply water and direction perpendicular to plane direction of supply-side flow channel material 11: supply-side flow channel center line
c: interval between intersection portions of supply-side flow channel material in direction perpendicular to supply water flow direction
d: interval between intersection portions of supply-side flow channel material in direction parallel to supply water flow direction
D_{C}: intersection portion thickness
Lₚ: minimum value of distance between fibrous material 21 or 22 and separation membrane on side close to fibrous material in plane 10
L_{q}: maximum value of distance between fibrous material 21 or 22 and separation membrane on side close to fibrous material in plane 10
P: in plane 10, a point on outer periphery of fibrous material at which distance between fibrous material 21 or 22 and separation membrane on side close to fibrous material is minimized
Q: point on outer periphery of fibrous material at which distance between fibrous material 21 or 22 and separation membrane on side close to fibrous material is maximum on supply water downstream side of point P
θ: elevation angle from point P to point Q
W1: yarn width in a direction perpendicular to supply water flow direction in cut surface of fibrous material 21 or 22 in plane parallel to supply water flow direction and perpendicular to plane direction of supply-side flow channel material
W2: distance between straight line passing through center in thickness direction of cut surface and parallel to flow direction of supply water and a straight line passing through center in thickness direction of supply-side flow channel and parallel to flow direction of supply water, in cut surface of fibrous material 21 or 22 in plane parallel to supply water flow direction and perpendicular to plane direction of supply-side flow channel material
lₚ: outer periphery on side close to separation membrane surface among outer peripheries connecting points P and Q in cut surface
l_{q}: outer periphery on side far from separation membrane surface among outer peripheries connecting points P and Q in cut surface
lq': line segment that convexly encapsulates outer periphery l_{q}
α: ratio of area of cut surface to area of figure formed by outer periphery lₚ and line segment l_{q}'

## Claims

1. A separation membrane element comprising:
a water collection pipe;
a separation membrane having a supply-side surface and a permeation-side surface;
a supply-side flow channel material disposed on the supply-side surface; and
a permeation-side flow channel material disposed on the permeation-side surface,
wherein the separation membrane, the supply-side flow channel material, and the permeation-side flow channel material are wound around the water collection pipe,
the supply-side flow channel material has a net shape in which a plurality of fibrous rows X formed of fibrous materials A arranged in one direction and a plurality of fibrous rows Y formed of fibrous materials B arranged in a direction different from that of the fibrous rows X three-dimensionally intersect each other to form intersection points,
a yarn diameter of a fibrous material other than an intersection portion of the supply-side flow channel material is smaller than a yarn diameter of the intersection portion,
in a plane parallel to a flow direction of supply water and perpendicular to a plane direction of the supply-side flow channel material, when a point, at which a distance between the separation membrane and a cut surface of at least one of the fibrous materials A and B other than an intersection portion is minimum, on an outer periphery of the cut surface is denoted by P; a point, at which a distance on the same side as the distance to the separation membrane is maximum, on the outer periphery of the cut surface downstream of P in a flow of the supply water is denoted by Q; a distance between P and the separation membrane is denoted by Lₚ; a distance between Q and the separation membrane is denoted by L_{q}; and an elevation angle from P to Q is denoted by θ [°]; a relation of θ × (1 - Lₚ/L_{q})² > 15 is satisfied in a portion of 50% or more of the fibrous materials other than the intersection portions of the supply-side flow channel material,
when a ratio of an area of the cut surface to an area of a figure formed by an outer periphery lₚ and a line segment l_{q}' that convexly encapsulates an outer periphery l_{q}, where the outer periphery lₚ is an outer periphery connecting P and Q on a side close to the separation membrane surface and the outer periphery l_{q} is an outer periphery connecting P and Q on a side far from the separation membrane surface in the cut surface, is denoted by α, a relation of α ≥ 70% is satisfied, and
Lₚ is 15% or less of a thickness D_{C} of the supply-side flow channel.

2. The separation membrane element according to claim 1, wherein relations of θ × (1 - Lₚ/L_{q})² > 20 and θ > 43° are satisfied.

3. The separation membrane element according to claim 1, wherein relations of θ × (1 - Lₚ/L_{q})² > 24 and θ > 46° are satisfied.

4. The separation membrane element according to any one of claims 1 to 3, wherein in the cut surface, when a maximum width of the supply-side flow channel material in a thickness direction is denoted by W₁, and a distance between a straight line passing through a center of the cut surface in the thickness direction and parallel to the flow direction of the supply water and a straight line passing through a center of the supply-side flow channel in the thickness direction and parallel to the flow direction of the supply water is denoted by W₂, a relation of W₂ - W₁/2 ≥ 0 is satisfied.

5. The separation membrane element according to any one of claims 1 to 4, wherein the separation membrane element has a protrusion at a rear portion of the flow direction of the supply water in the cut surface.

6. The separation membrane element according to any one of claims 1 to 5, wherein a relation of α ≥ 90% is satisfied.

7. The separation membrane element according to any one of claims 1 to 6, wherein the supply-side flow channel material is an oblique net.

8. The separation membrane element according to any one of claims 1 to 7, wherein an interval between intersection portions of the supply-side flow channel material in the flow direction of the supply water is 5 times or more and 10 times or less a thickness of the supply-side flow channel material.

9. The separation membrane element according to any one of claims 1 to 7, wherein an interval between intersection portions of the supply-side flow channel material in the flow direction of the supply water is 5 times or more and 7 times or less a thickness of the supply-side flow channel material.

10. The separation membrane element according to any one of claims 1 to 7, wherein an interval between intersection portions of the supply-side flow channel material in the flow direction of the supply water is 8 times or more and 10 times or less a thickness of the supply-side flow channel material.

11. A liquid filtration method using the separation membrane element according to any one of claims 1 to 10.

12. A liquid separation device using the separation membrane element according to any one of claims 1 to 10.
